Europäisches Patentamt

European Patent Office

Office européen des brevets

(19)

(11) Publication number: **0 094 139**
**B1**

(12) **EUROPEAN PATENT SPECIFICATION**

(45) Date of publication of patent specification: **13.08.86**

(51) Int. Cl.⁴: **C 01 B 33/18, C 01 C 1/16**

(21) Application number: **83200673.8**

(22) Date of filing: **10.05.83**

(54) Process for the preparation of pure silicon dioxide.

(30) Priority: **11.05.82 NL 8201925**

(43) Date of publication of application:
**16.11.83 Bulletin 83/46**

(45) Publication of the grant of the patent:
**13.08.86 Bulletin 86/33**

(84) Designated Contracting States:
**BE DE FR GB IT NL**

(56) References cited:
**US-A-3 271 107**

(73) Proprietor: **UNIE VAN KUNSTMESTFABRIEKEN B.V.**
**Postbus 45**
**NL-3500 AA Utrecht (NL)**

(72) Inventor: **Spijker, Ruud**
**Rousselstraat 20**
**NL-1962 AJ Heemskerk (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

**Description**

The invention relates to a process for the preparation of pure silicon dioxide by converting a hexafluorosilicic acid solution in two steps with an ammonium hydroxide solution and separating off the precipitated silicon dioxide.

Such a process is known from the US patent specification 3,271,107. In the process described therein a hexafluorosilicic acid solution is reacted in a first step during violent stirring with ammonium hydroxide until a pH of 6—8 has been reached, upon which the slurry formed is treated in a second step with ammonium hydroxide to a pH of 8.3—9.0 and the precipitated silicon dioxide is subsequently separated off from the resulting slurry.

A disadvantage of this known process is that the silicon dioxide obtained is badly contaminated. For instance, the metal content in particular is rather high. The product thus obtained can therefore be used for just a few technical purposes, for instance as an additive for paints and rubber products.

The invention now provides a process which makes it possible to obtain a pure silicon dioxide on the basis of even highly contaminated hexafluorosilicic acid solutions.

This is achieved, according to the invention, by treating a hexafluorosilicic acid solution in a first step with a quantity of ammonium hydroxide solution amounting to 40—75% by weight of the quantity stoichiometrically required for the conversion to ammonium fluoride and silicon dioxide, separating off the precipitate formed in this treatment, treating the remaining solution in a second step with ammonium hydroxide and separating off the pure silicon dioxide precipitate obtained in this treatment.

Preferably a 10—30% by weight, more specifically a 15—20% by weight, hexafluorosilicic acid solution is started from. Such a solution can be obtained by diluting or concentrating industrial $H_2SiF_6$ solutions, specifically solutions obtained by scrubbing silicon- and fluorine-containing off-gases of a phosphate digestion and/or of an evaporation section of a wet-process phosphoric acid manufacturing process. Such solutions generally contain many impurities, particularly metal compounds, which are fairly hard to remove. If so desired, this solution can be subjected to a prior purification step, such as for instance distillation, treatment with absorbents and/or precipitation by addition of certain chemicals.

As ammonium hydroxide solution preference is given to using a 20—30% by weight solution. Generally a total quantity of ammonium hydroxide is used that is about the same as the quantity stoichiometrically required for the conversion. Preference is given to supplying 50—60% by weight of this total quantity to the first step.

The temperature during the conversion may vary. It has been found that, when applying low temperatures, the conversion will be rather slow, while at high temperature silicon dioxide in a coarse form will precipitate, which has, however, a fairly small specific surface and is therefore hard to wash.

Preference is given to keeping the temperature between 25 and 50°C, more specifically between 30 and 40°C. To this end the reaction mixture should generally be cooled during the conversion, the reaction being exothermic.

It has been found that in order to obtain a well separable and washable silicon dioxide precipitate a proper and uniform mixing of the reactants is important. This is effected preferably by metering the reactants continuously and simultaneously to a well stirred reactor in both steps.

From the reaction mixture formed in the first step, substantially consisting of a solution of ammonium fluoride and di-ammonium hexafluorosilicate with a quantity of precipitate, the precipitate is separated off, for instance by filtration, decantation or centrifugation. This precipitate substantially contains silicon dioxide and metal compounds, and can, after washing if so desired, be used as filler for rubbers, additive to pigments, etc.

The liquid remaining after separating off the precipitate can subsequently be fed direct to the second step. Preferably, however, this liquid is first treated with an ion exchanger, so that in the second step a pure silicon dioxide results. Moreover, it has been found that as a result of this treatment in the second step a silicon dioxide is obtained having a substantially larger specific surface. For this treatment preference is given to using a chelating, weakly acidic cation exchanger.

From the reaction mixture formed in the second step, substantially consisting of an ammonium fluoride solution with solid silicon dioxide, the silicon dioxide is separated off, for instance by filtration, decantation or centrifugation. This product, which as a very low content of metal impurities, can be used as such, for instance as a substitute for quartz, as starting material for catalyst carrier material, etc. A great advantage compared with industrial silica, prepared from sodium silicate, is that the product is virtually free of sodium, so that it is sinterproof. Preference, however, is given to washing the precipitate, by which the heavy metal content can even be substantially reduced. As washing liquid neutral, weakly basic, as well as weakly acidic liquids can be used. Preference is given to washing with a dilute mineral acid, for instance hydrochloric acid, preceded, if so desired, by washing with water. After separating off the silicon dioxide precipitate in the process according to the invention, a reaction liquid will result substantially consisting of an ammonium fluoride solution. This solution can be worked up, for instance by concentration, to technical ammonium fluoride, or be converted into, for instance, alkali metal fluorides, aluminium fluoride or hydrogen fluoride.

The invention is further elucidated by means of the following examples.

Example I

To a first reactor provided with a cooler and stirrer 910 g/hour of an $H_2SiF_6$ solution in a concentration of 18% by weight and 290 g/hour of an $NH_4OH$ solution in a concentration of 25% by weight were supplied continuously and simultaneously. The $H_2SiF_6$ solution had been obtained by diluting with demineralized water a crude 35.8% by weight $H_2SiF_6$ solution from the evaporation section of a phosphate processing plant. The dilute solution had a fluorine and $P_2O_5$ content of 14.4% by weight and 0.23% by weight respectively and contained, in addition to 330 ppm chlorine, substantial quantities of metal, such as 30 ppm Na, 223 ppm Ca, 64 ppm Fe, 16 ppm As.

The residence time of the reactants in this first reactor was about 15 minutes, while the temperature was kept between about 30 and 40°C. The reaction mixture formed was successively filtered over a glass filter, upon which the resulting filtrate (pH 7.25) was passed to a second reactor provided with stirrer and cooler, to which reactor a 25% by weight $NH_4OH$ solution was supplied simultaneously. The filtrate and the $NH_4OH$ solution were metered to this second reactor at a rate of respectively 1820 g/hour and 290 g/hour. The residence time of the reactants in this second reactor was about 8 minutes, while the temperature was kept between about 30 and 40°C.

The reaction mixture formed was successively filtered over a glass filter, and the $NH_4F$ solution (pH 8.85) obtained in the form of a clear filtrate was carried off. The filter cake was washed on the filter six times with demineralized water, dried at 150°C and subsequently analyzed. The results of this analysis are summarized in Table I.

Example II

The process of Example I was repeated so, however, that the filtrate obtained after filtration of the reaction mixture from the first reactor was passed through three columns (length 10 cm, diameter 12 mm) consisting of a chelating, weakly acidic cation exchange resin available under the name of Chelex-100 of the firm of BioRad. The resin was subjected to a prior treatment with a 10% by weight $H_2SiF_6$ solution for about 1 hour, subsequently filtered and washed, then suspended in an $(NH_4)_2SiF_6$-containing salt solution and washed again.

The washed filter cake ultimately obtained was analyzed. The results are summarized in Table I.

Comparative Example A

In the same way as in Example I an 18% by weight $H_2SiF_6$-solution was converted with a 25% by weight $NH_4OH$-solution, but without intermediate filtering-off of the mixture. The filter cake ultimately obtained was washed and analyzed. The results of this analysis are also summarized in Table I.

TABLE I

|  | Comparative Example A | Example I | Example II |
|---|---|---|---|
| Sodium | 270 ppm | 225 ppm | 150 ppm |
| Iron | 250 ppm | 177 ppm | 36 ppm |
| Copper | 0.7 ppm | 0.6 ppm | 0.5 ppm |
| Nickel | 1.3 ppm | 0.8 ppm | 0.6 ppm |
| Chromium | 20 ppm | 3 ppm | 4 ppm |
| Cobalt | 0.05 ppm | 0.05 ppm | <0.05 ppm |
| Manganese | 16 ppm | 5.6 ppm | 0.3 ppm |
| Vanadium | 10 ppm | 1.4 ppm | <0.1 ppm |
| Specific surface | 12 m²/g | 73 m²/g | 260 m²/g |

These results clearly show that, compared with the known processes, the process according to the invention results in a product having a substantially lower content of metal impurities. Particularly the Fe, Cr, Mn and V content has been substantially reduced. The treatment with the ion exchanger causes the content of particularly Fe, Mn and V to be reduced even further.

Moreover, it will be found that in applying the process according to the invention a product is obtained having a much larger specific surface, particularly if a treatment with an ion exchanger has taken place.

3

Example III

Parts of the filter cakes obtained in Examples I and II were washed six times with different washing liquids, subsequently dried at 150°C, upon which the fluorine content and the specific surface of the product were determined. The results are summarized in Table II.

TABLE II

| Filter cake | Washing liquid | Fluorine content in ppm | Specific surface in m²/g |
|---|---|---|---|
| Example I | None | 176.000 | — |
| Example I | Water | 66 | 73 |
| Example I | 1%-$(NH_4)_2CO_3$-sol. | 52 | 167 |
| Example I | 1%-$NH_3$-sol. | 92 | 107 |
| Example I | 1%-HCl-sol. | 825 | 200 |
| Example II | None | >100.000 | — |
| Example II | Water | 70 | 260 |
| Example II | 1%-$(NH_4)_2CO_3$-sol. | 53 | 204 |
| Example II | 1%-$NH_3$-sol. | 23 | 178 |
| Example II | 1%-HCl-sol. | 1.140 | 305 |

It is clear that by washing, particularly with neutral or slightly alkaline washing liquids, a strong decline in the content of fluorine compounds of the product will result.

Example IV

Part of the filter cake obtained in applying the process according to Example 1 was treated, after washing with water and after drying, with a 1% by weight HCl solution for 4 hours, subsequently filtered, rewashed with water and dried. On analysis it was found that the calcium content had decreased from about 600 ppm to 100 ppm and the iron content from 177 ppm to 42 ppm.

**Claims**

1. Process for the preparation of pure silicon dioxide by converting a solution of hexafluorosilicic acid in two steps with an ammonium hydroxide solution, characterized in that in the first step a quantity of ammonium hydroxide is used amounting to 40—75% by weight of the quantity stoichiometrically required for the conversion to ammonium fluoride and silicon dioxide, the precipitate formed in this step is separated off, the remaining solution is treated in a second step with ammonium hydroxide and the pure silicon dioxide precipitate obtained in this treatment is separated off.

2. Process according to Claim 1, characterized in that in both steps a temperature of 25—50°C is maintained.

3. Process according to Claim 1 or 2, characterized in that in both steps the reactants are supplied continuously and simultaneously to a stirred reactor.

4. Process according to any one of Claims 1—3, characterized in that in the first step a quantity of ammonium hydroxide is used amounting to 50—60% by weight of the quantity stoichiometrically required for the conversion.

5. Process according to any one of Claims 1—4, characterized in that the solution from the first step remaining after separating off the precipitate is treated with an ion exchanger.

6. Process according to Claim 5, characterized in that the treatment is effected with a chelating, weakly acidic cation exchanger.

7. Process according to any one of Claims 1—6, characterized in that the precipitate obtained from the second step is washed.

8. Process according to Claim 7, characterized in that the washing is done with water and/or dilute mineral acids.

**Patentansprüche**

1. Verfahren zur Herstellung von reinem Siliziumdioxid durch Umsetzung einer Lösung von Hexafluorkieselsäure in zwei Stufen mit einer Ammoniumhydroxidlösung, dadurch gekennzeichnet, daß in der ersten Stufe eine Menge an Ammoniumhydroxid von 40—75 Gew.-% der Menge, die stöchiometrisch für die Umsetzung zu Ammoniumfluorid und Siliziumdioxid erforderlich ist, eingesetzt, die in dieser Stufe gebildete Fällung abgetrennt, die ververbleibende Lösung in einer zweiten Stufe mit Ammoniumhydroxid behandelt, und die bei dieser Behandlung erhaltene Fällung von reinem Siliziumdioxid abgetrennt wird.

4

2. Verfahren nach Anspruch 1, dadurch gekennzeichnet, daß in beiden Stufen eine Temperatur von 25—50°C aufrecht erhalten wird.

3. Verfahren nach Anspruch 1 oder 2, dadurch gekennzeichnet, daß in beiden Stufen die Reaktanten kontinuierlich und gleichzeitig einem Rührreaktor zugesetzt werden.

4. Verfahren nach einem der Ansprüche 1—3, dadurch gekennzeichnet, daß in der ersten Stufe eine Menge an Ammoniumhydroxid von 50—60 Gew.-% der stöchiometrisch für die Umsetzung erforderlichen Menge eingesetzt wird.

5. Verfahren nach einem der Ansprüche 1—4, dadurch gekennzeichnet, daß die nach der Abtrennung der Fällung verbleibende Lösung aus der ersten Stufe mit einem Ionenaustauscher behandelt wird.

6. Verfahren nach Anspruch 5, dadurch gekennzeichnet, daß die Behandlung mit einem chelatbildenden, schwach sauren Kationenaustauscher durchgeführt wird.

7. Verfahren nach einem der Ansprüche 1—6, dadurch gekennzeichnet, daß die aus der zweiten Stufe erhaltene Fällung gewaschen wird.

8. Verfahren nach Anspruch 7, dadurch gekennzeichnet, daß das Waschen mit Wasser und/oder verdünnten Mineralsäuren durchgeführt wird.

**Revendications**

1. Procédé de préparation de bioxyde de silicium pur par conversion d'une solution d'acide hexafluorosilicique en deux stades avec une solution d'hydroxyde d'ammonium, caractérisé en ce qu'au premier stade on utilise une quantité d'hydroxyde d'ammonium représentant de 40 à 75% en poids de la quantité stoechiométriquement requise pour la conversion en fluorure d'ammonium et en bioxyde de silicium, on sépare le précipité formé à ce stade, on traite la solution restante en un second stade avec de l'hydroxyde d'ammonium et on sépare le précipité de bioxyde de silicium pur obtenu par ce traitement.

2. Procédé selon la revendication 1, caractérisé en ce que dans les deux stades on maintient la température entre 25 et 50°C.

3. Procédé selon la revendication 1 ou 2, caractérisé en ce que dans les deux stades on fournit les réactifs continuellement et simultanément à un réacteur agité.

4. Procédé selon l'une quelconque des revendications 1 à 3, caractérisé en ce qu'au premier stade on utilise une quantité d'hydroxyde d'ammonium représentant 50 à 60% du poids de la quantité stoechiométrique nécessaire à la conversion.

5. Procédé selon l'une quelconque des revendications 1 à 4, caractérisé en ce qu'on traite la solution du premier stade qui reste après la séparation du précipité avec un échangeur d'ions.

6. Procédé selon la revendication 5, caractérisé en ce qu'on effectue le traitement avec un échangeur de cations chélateur faiblement acide.

7. Procédé selon l'une quelconque des revendications 1 à 6, caractérisé en ce qu'on lave le précipité obtenu au second stade.

8. Procédé selon la revendication 7, caractérisé en ce qu'on effectue le lavage avec de l'eau et/ou avec des acides minéraux dilués.

5